# EUROPÄISCHE PATENTANMELDUNG

(11) **EP 1 384 926 A2**
(43) Veröffentlichungstag der Anmeldung: **28.01.2004**
(21) Anmeldenummer: 03012764.1
(22) Anmeldetag: 05.06.2003
(51) Int. Cl.: F16K 27/02, F16K 47/02

(54) **Heizkörperventil für Heizungsanlagen**

(30) Priorität: 16.07.2002 DE 10232068
(71) Anmelder: Theodor Heimeier Metallwerk GmbH & Co KG, 59597 Erwitte (DE)
(72) Erfinder: Henke, Bernhard, 59929 Brilon (DE); Ruschkowski, Alfred, 59510 Lippetal (DE); Troike, Karl-Heinz, 59590 Geseke (DE)

(57) **Zusammenfassung**

Bei einem Heizkörperventil für Heizungsanlagen mit einem Ventilgehäuse (1) in das ein Ventileinsatz (2) eingeschraubt ist, der eine in axialer Richtung verschlieblichen und in Öffnungsrichtung federbelasteten Ventilstößel (6) trägt und mit einem in Richtung auf ein Ventilsitz (11) des Ventilgehäuses (1) am Ventilstößel (6) angeordneten gummielastischen Verschlußkörper (8), der eine mit dem Ventilsitz (11) zusammenwirkende Dichtkante (14) aufweist (Fig.2) weist der Verschlußkörper (8) auf der dem Ventilsitz (11) zugewandten Stirnseite auf dem Umfang verteilte Erhebungen (12) auf. (Fig.2) Diese Erhebungen (12) sind zu der Dichtkante (14) benachbart angeordnet.

## Beschreibung

Die Erfindung betrifft ein Heizkörperventil für Heizungsanlagen mit einem Ventilgehäuse, in das ein Ventileinsatz eingeschraubt ist, der einen in axialer Richtung verschieblichen und in Öffnungsrichtung federbelasteten Ventilstößel trägt und mit einem in Richtung auf einen Ventilsitz des Ventilgehäuses an dem Ventilstößel angeordenten gummielastischen Verschlußkörper, der eine mit dem Ventilsitz zusammenwirkende Dichtkante aufweist.

Ein derartiges Heizkörperventil ist aus der DE 19912818 A 1 bekannt. Der Verschlußkörper dieses bekannten Heizkörperventiles weist eine glattflächige Stirnseite auf, die in eine scharfe, radial umlaufende Dichtkante übergeht, welche mit dem Ventilsitz zusammenwirkt und den Regelquerschnitt des Heizkörperventiles bildet.

In energiesparenden Heizungsanlagen übernehmen derartige Heizkörperventile im Zusammenwirken, insbesondere mit Thermostatventilköpfen, die Regelung der Raumlufttemperatur und somit die Dosierung des Durchflußes zum Heizkörper. Um dieser Aufgabe gerecht zu werden, verfügt ein derartiges Heizkörperventil über einen sehr geringen Regelquerschnitt, der vom Heizwasser durchströmt werden muß. Dazu ist eine entsprechende hydraulische Druckdifferenz zwischen der An- und der Abströmseite des Ventiles zur Verfügung zu stellen. Dieser Differenzdruck wird bei der Ventildimensionierung bzw. bei der Rohrnetzberechnung berücksichtigt.

Nun ergibt sich jedoch das Problem, daß bei ungünstiger Anströmung des Heizkörperventiles sich hochfrequente Geräusche an diesem geringfügigen Regelquerschnitt bilden, die durch den angeschlossenen Heizkörper bzw. das Rohrleitungssystem der Heizungsanlage noch verstärkt werden können. Die Intensität des Geräuschpegels ist abhängig von den Druckdifferenzen zwischen der An- und Abströmseite.

Die Erfindung hat die Aufgabe ein Heizkörperventil für Heizungsanlagen zu schaffen, daß auch bei hohen Druckdifferenzen und bei ungünstiger Anströmung des Heizkörperventiles möglichst wenig Geräusch verursacht.

Diese Aufgabe wird erfindungsgemäß dadurch gelöst, daß der Verschlußkörper auf der dem Ventilsitz zugewandten Stirnseite auf dem Umfang verteilte Erhebungen aufweist, die zu der Dichtkante benachbart angeordnet sind.

Durch die erfindungsgemäß vorgesehenen Erhebungen werden in der Nähe des Regelquerschnittes zwischen der Dichtkante und dem Ventilsitz gezielt zusätzliche Turbulenzen erzeugt. Durch diese zusätzlichen Turbulenzen wird das Frequenzspektrum der erzeugten Vibrationen bzw. Geräusche so weit vergrößert, daß gegebenenfalls in dem Heizkörperventil bzw. der übrigen Heizungsanlage konstruktiv vorgegebener Eigenfrequenz in deutlich geringerem Umfang als ohne Anwendung der beschriebenen Erfindung angeregt werden. Dies führt letztlich zu einer deutlichen Verringerung der Geräuschentwicklung des erfindungsgemäßen Heizkörperventiles sowohl bei sehr hohen Druckdifferenzen zwischen der An- und der Abströmseite, als auch bei einer ungünstigen Anströmung des erfindungsgemäßen Heizkörperventiles.

Versuche haben gezeigt, daß die erfindungsgemäße Lösung in beiden Anströmrichtungen dieses 2 Wegeventiles wirkt, so daß sich die erfindungsgemäßen Vorteile weitgehend unabhängig von der konkreten Einbausituation des Heizkörperventiles ergeben.

Vorteilhafte Ausgestaltung und Weiterbildung der Erfindung ergeben sich aus den Unteransprüchen und werden im folgenden näher erläutert.

So ist es vorteilhaft die Erhebungen auf dem Umfang gleichmäßig zu verteilen, weil dann die gewünschte Turbulenzerzeugung unabhängig von dem jeweils sich konkret ergebenden Strömungsverhältnissen im Bereich des Regelquerschnittes wirkt. Die Erhebungen können anderseits als zylinderförmige Noppen freistehend auf der dem Ventilsitz zugewandten Stirnseite ausgebildet sein. Es ist jedoch auch möglich die Erhebungen als radial verlaufende Stege auszubilden, die beispielsweise zur Mittelachse hin in einen Dom des Verschlußkörpers einlaufen. Dies hat vor allen Dingen seinen Grund darin, daß die dem Regelquerschnitt zugewandte Seiten der Erhebungen die Turbulenzen erzeugen.

Die Erhebungen können besonders vorteilhaft in Richtung des Regelquerschnittes stirnseitig scharfe Kanten aufweisen, um die Erzeugung von Turbulenzen zu fördern. Da die Erzeugung der Turbulenzen möglichst nahe am Regelquerschnitt erfolgen sollte, ist es ebenfalls besonders vorteilhaft wenn die Erhebungen zur Dichtkante unmittelbar benachbart angeordnet sind, ohne jedoch das vollständige Schließen des Heizkörperventiles durch Aufpressen der Dichtkante auf den Ventilsitz zu behindern.

Aus Gründen der Fertigungsvereinfachung können die Erhebungen auf beiden Stirnseiten des Verschlußkörpers angeordnet sein. Die üblicherweise verwendeteten Verschlußkörper sind sehr kleine Teile die im Montageprozess mittels Automaten nur schwer orientierbar sind. Weisen beide Stirnseiten des Verschlußkörpers Erhebungen auf, so ist es für die ordnungsgemäße Montage des Heizkörperventiles unerheblich, mit welcher Orientierung der Verschlußkörper montiert wird.

Der Verschlußkörper kann zwischen einem Ventilteller und einer Haltescheibe eingepreßt sein, um ihn möglichst vollständig in seiner Lage zu den übrigen Ventilteilen zu fixieren und um auch dadurch unnötige Geräuschbildungen durch Vibrationen des Verschlußkörpers zu vermeiden. In diesem Zusammenhang ist es besonders vorteilhaft, wenn der Ventilteller zu einem Ventiltopf ausgebildet ist, um auch eine seitliche Führung des Verschlußkörpers außerhalb des Bereiches des Regelquerschnittes zu gewährleisten. Sollte ein derartiger Ventilteller verwendet werden und sollte ein Verschlußkörper verwendet werden, der auf beiden Stirnseiten Erhebungen aufweist, so ist es besonders vorteilhaft, wenn der Ventilteller eine kreisförmige Nut zur Aufnahme der von dem Ventilsitz abgewandten Erhebungen aufweist. Durch diese Maßnahme wird eine nur unvollständige Lagefixierung des Verschlußkörpers vermieden, was ebenfalls zur Geräuschminderung beiträgt.

Ausführungsbeispiele des erfindungsgemäßen Heizkörperventiles sind in den Zeichnungen dargestellt und werden im folgenden anhand der Zeichnungen näher erläutert.

Es zeigen
- Figur 1: einen Längsschnitt durch ein Heizkörperventil längs der Mittelachse dieses Ventiles,
- Figur 2: eine perspektivische Darstellung des Heizkörperventiles gemäß Figur 1 im Bereich des Regelquerschnittes,
- Figur 3: eine Detailansicht des verwendeten Verschlußkörpers in dem Ventil gemäß Figuren 1 und 2,
- Figur 4: eine Detailansicht des Ventileinsatzes wie er in den Ventilen gemäß Figuren 1 und 2 zur Verwendung kommt,
- Figur 5: eine alternative Verschlußkörperausbildung teilweise geschnitten und
- Figur 6: eine Ansicht auf die Stirnseite des Verschlußkörpers gemäß Figur 5.

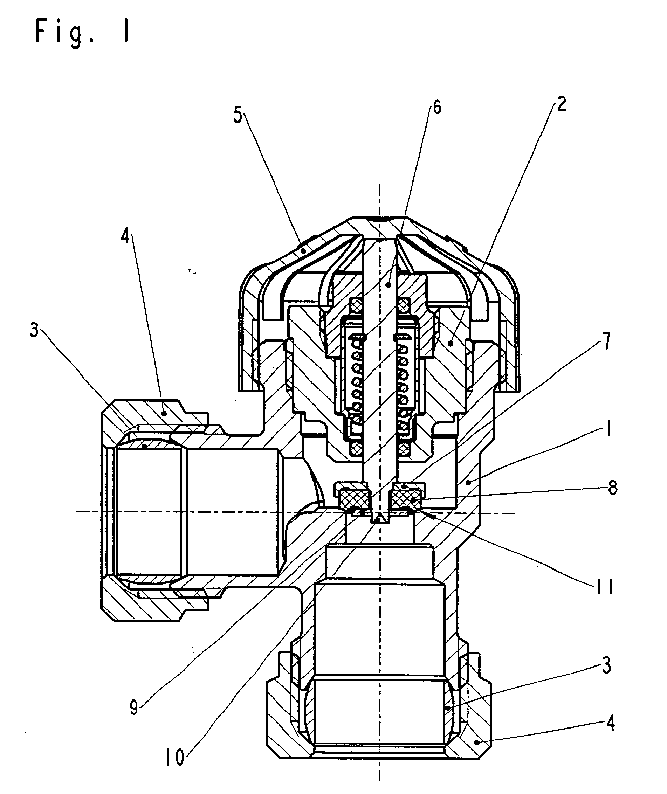

In der Figur 1 weist das Heizkörperventil ein Ventilgehäuse (1) auf, in das ein Ventileinsatz (2) eingeschraubt ist. Das Heizkörperventil wird mittels Dichtungsringen (3) und Verschraubungsmuttern (4) mit dem in den Figuren nicht dargestellten Heizkörper und der übrigen Heizungsanlage verbunden, wobei die Anströmung des Ventiles sowohl in der Figur 1 von unten als auch in der Figur 1 von links erfolgen kann. Die Anströmung des Ventiles in der Figur 1 von unten ist unter dem Gesichtspunkt der Geräuscherzeugung besonders kritisch. Durch die im folgenden beschriebenen erfindungsgemäßen Maßnahmen wird die Gefahr der Geräuscherzeugung hierdurch deutlich verringert.

In der Figur 1 oben weist das Heizkörperventil eine Drehhandhabe (5) auf, die jedoch häufig durch einen Thermostatventilkopf ersetzt wird. Diese Drehhandhabe (5) wirkt auf einen Ventilstößel (6), der in dem Ventileinsatz (2) axial verschieblich angeordnet und in Öffnungsrichtung federbelastet ist.

Das Ventilgehäuse (1) weist einen Ventilsitz (11) auf, der mit einem gummielastischen Verschlußkörper (8) zusammenwirkt. Dieser gummielastische Verschlußkörper (8) ist zwischen einem Ventilteller (7) und einer Haltescheibe (9) eingepresst und an der dem Ventilsitz (11) zugewandten Seite des Ventilstößels (6) befestigt. Zu diesem Zweck weist der Ventilstößel (6) an dem in der Figur 1 nach unten weisenden Ende eine Stauchung (10) auf, die die Haltescheibe (9) gemeinsam mit dem gummielastischen Verschlußkörper (8) und dem Ventilteller (7) auf dem Ventilstößel (6) fixiert.

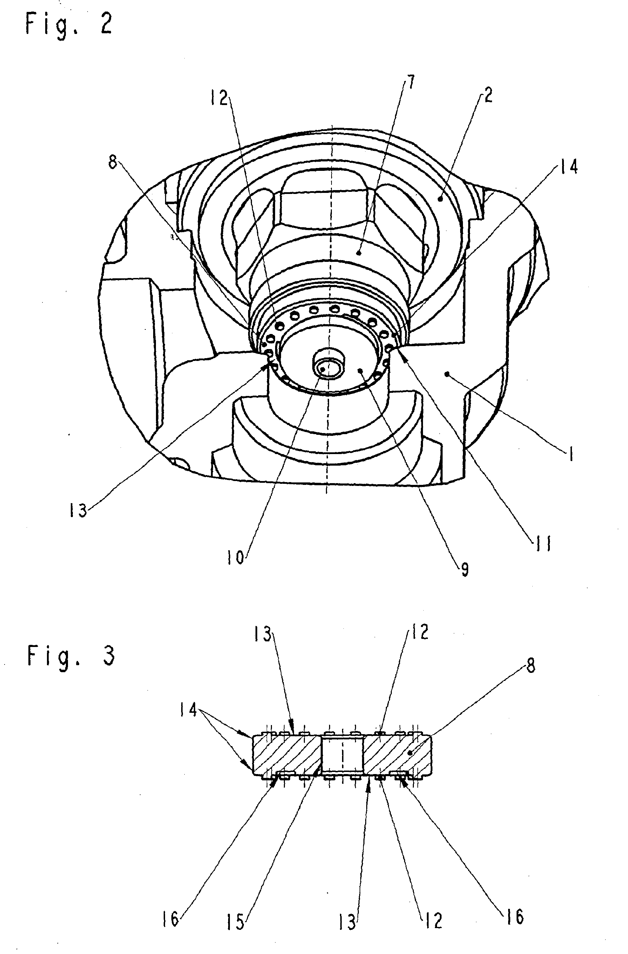

In der Figur 2 sind gleiche oder gleichwirkende Einrichtungsteile mit den selben Bezugszeichen wie in der Figur 1 gekennzeichnet. In der Figur 2 wird erkennbar, daß der Verschlußkörper (8) auf der dem Ventilsitz (11) zugewandten Stirnseite (13) Erhebungen (12) aufweist, die als gleichmäßig auf dem Umfang verteilte zylinderförmige Noppen ausgebildet sind. Diese zylinderförmigen Noppen (12) sind einer Dichtkante (14) unmittelbar benachbart angeordnet. Diese Dichtkante (14) kann abgerundet oder auch gefast sein.

Die Dichtkante (14) bildet gemeinsam mit dem Ventilsitz (11) den sogenannten Regelquerschnitt, der bei derartigen Heizkörperventilen häufig nur einige wenige Zehntel mm öffnet. Durch diesen flachen Spalt wird das Heizungswasser mit vergleichsweiser großer Geschwindigkeit hindurch gepreßt, was zur Erzeugung von Unterdruck im Bereich des Regelquerschnittes und zu einem Flattern des gummielastischen Verschlußkörpers (8) führen kann. Durch die erfindungsgemäß vorgesehenen Erhebungen (12) wird die Strömung im Bereich des Regelquerschnittes soweit turbulent, daß sich im Bereich des Regelquerschnittes durch die Umströmung der Erhebungen (12) unterschiedliche Strömungsgeschwindigkeiten ergeben, die die Flatterneigung des gummielastischen Verschlußkörpers (8) deutlich reduzieren.

In der Figur 3 wird am Querschnitt durch den gummielastischen Verschlußkörper (8) deutlich, daß dieser Verschlußkörper (8) auf beiden Stirnseiten (13) die als zylinderförmige Noppen ausgebildeten Erhebungen (12) aufweist. Ebenso sind zwei Dichtkanten (14) mit definierten Rundungen vorgesehen, so daß der gummielastische Verschlußkörper (8) gemäß der Figur 3 mit einer Durchgangsöffnung (15) mit beiden möglichen Orientierungen an dem Ventilstößel (6) befestigt werden kann und in beiden Fällen sich die vorteilhaften Wirkungen der Erfindung ergeben. D. h., im Montageprozess kann auf eine aufwendige besondere Orientierung des gummielastischen Verschlußkörpers (8) verzichtet werden.

Eventuell erforderliche Herstellungs- oder Typkennzeichnungen des Verschlußkörpers (8) werden in Ausnehmungen (16) des Verschlußkörpers (8) angeordnet, so daß sie nicht erhaben über die Oberfläche des Verschlußkörpers hinaus stehen.

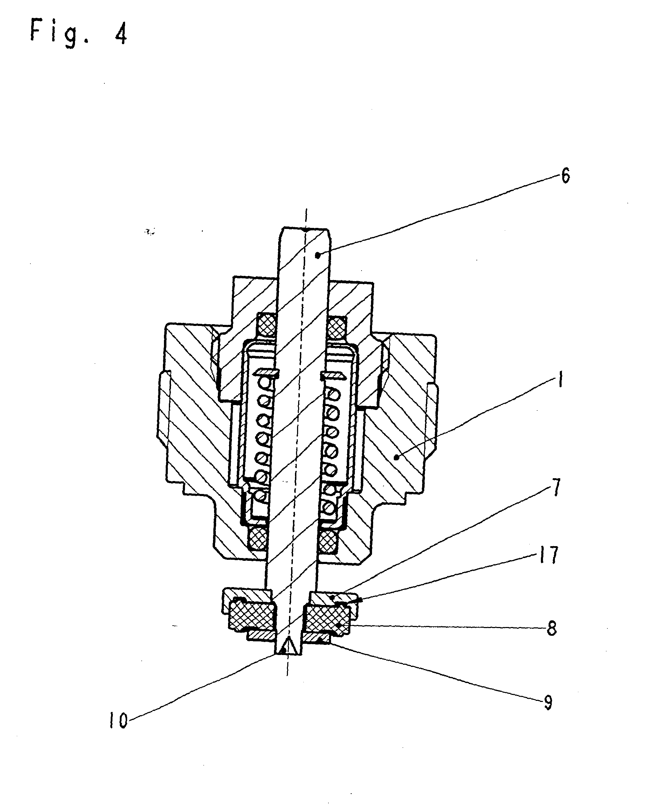

In der Figur 4 sind gleich oder gleichwirkende Einrichtungsteile wie in den Figuren 1 bis 3 mit den selben Bezugszeichen versehen. Man erkennt in der Figur 4, daß der Ventilteller (7) als Ventiltopf ausgebildet ist, um auch eine seitliche Führung des gummielastischen Verschlußkörpers (8) zu gewährleisten. Darüber hinaus weist der Ventiltopf (7) eine kreisringförmige Nut (17) zur Aufnahme der überschüssigen Erhebungen (12) auf der vom Ventilsitz (11) abgewandten Stirnseite (13) des Verschlußkörpers (8) auf. Dies gewährleistet eine saubere Führung des Verschlußkörpers (8) durch den Ventiltopf (7).

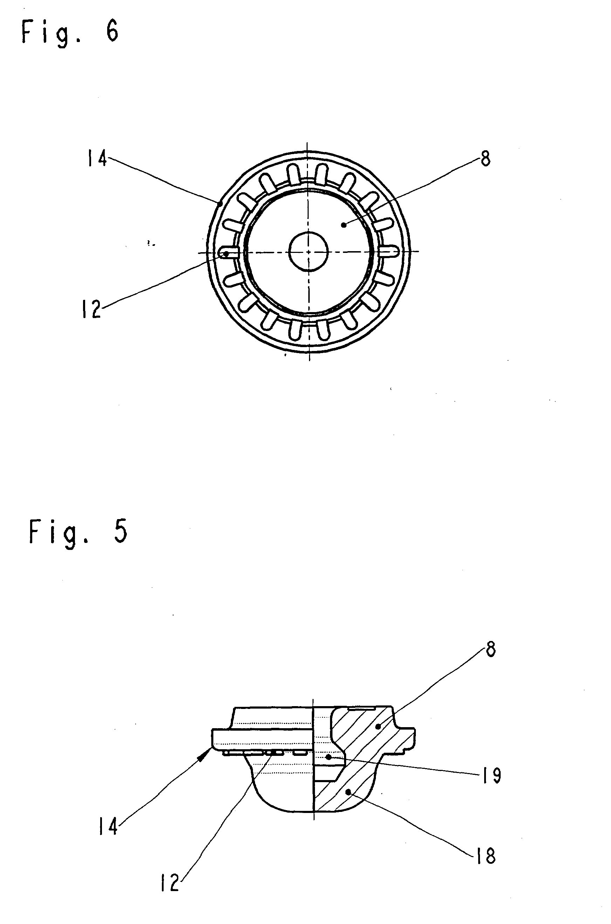

In der Figur 5 ist ein gummielastischer Verschlußkörper (8) dargestellt, der einen Dom (18) aufweist, in dem eine Einknöpföffnung (19) für den Ventilstößel (6) vorgesehen ist. D. h., ein Verschlußkörper (8) gemäß der Figur (5) ist dann verwendbar, wenn der Verschlußkörper auf ein entsprechend geformtes Ende eines Ventilstößels (6) aufgeknöpft wird. Auch bei dem Verschlußkörper (8) gemäß der Figur 5 ist eine abgerundete Dichtkante (14) vorgesehen, zu der unmittelbar benachbart Erhebungen (12) auf der Stirnseite angeordnet sind. Diese Erhebungen (12) sind jedoch in diesem Ausführungsbeispiel als radiale Stege ausgebildet, die zur Mittelachse hin in den Dom (18) einlaufen. Auch diese radialen Stege bewirken aufgrund der scharfkantigen Ausbildungen in Richtung auf die Dichtkante (14) die erfindungsgemäß gewünschte Erzeugung von Turbulenzen im Bereich des Regelquerschnittes.

## Patentansprüche

1. Heizkörperventil für Heizungsanlagen mit einem Ventilgehäuse (1), in das ein Ventileinsatz (2) eingeschraubt ist, der einen in axialer Richtung verschieblichen und in Öffnungrichtung federbelasteten Ventilstößel (6) trägt und mit einem in Richtung auf einen Ventilsitz (11) des Ventilgehäuses (1) an dem Ventilstößel (6) angeordneten gummielastischen Verschlußkörper (8), der eine mit dem Ventilsitz (11) zusammenwirkende Dichtkante (14) aufweist, **dadurch gekennzeichnet, dass** der Verschlußkörper (8) auf der dem Ventilsitz (11) zugewandten Stirnseite (13) auf dem Umfang verteilte Erhebungen (12) aufweist, die zu der Dichtkante (14) benachbart angeordnet sind.

2. Heizkörperventil nach Anspruch 1, **dadurch gekennzeichnet, dass** die Erhebungen (12) auf dem Umfang gleichmäßig verteilt sind.

3. Heizkörperventil nach Anspruch 1, **dadurch gekennzeichnet, dass** die Erhebungen (12) zylinderförmige Noppen sind.

4. Heizkörperventil nach Anspruch 1, **dadurch gekennzeichnet, dass** die Erhebungen (12) radial verlaufende Stege sind.

5. Heizkörperventil nach Anspruch 1, **dadurch gekennzeichnet, dass** die Erhebungen (12) stirnseitig scharfe Kanten aufweisen.

6. Heizkörperventil nach Anspruch 1, **dadurch gekennzeichnet, dass** die Erhebungen (12) zur Dichtkante (14) unmittelbar benachbart angeordnet sind.

7. Heizkörperventil nach Anspruch 1, **dadurch gekennzeichnet, dass** die Erhebungen (12) auf beiden Stirnseiten (13) des Verschlußkörpers (8) angeordnet sind.

8. Heizkörperventil nach Anspruch 1, **dadurch gekennzeichnet, dass** der Verschlußkörper (8) zwischen einem Ventilteller (7) und einer Haltescheibe (9) eingepreßt ist.

9. Heizkörperventil nach Anspruch 8, **dadurch gekennzeichnet, dass** der Ventilteller (7) als Ventiltopf ausgebildet ist.

10. Heizkörperventil nach Anspruch 7 und Anspruch 8, **dadurch gekennzeichnet, dass** der Ventilteller (7) eine kreisringförmige Nut (17) zur Aufnahme der von dem Ventilsitz (11) abgewandten Erhebungen (12) aufweist.
